(19) Europäisches Patentamt / European Patent Office / Office européen des brevets

(11) **EP 1 808 770 B1**

(12) **FASCICULE DE BREVET EUROPEEN**

(45) Date de publication et mention
de la délivrance du brevet:
**29.07.2009   Bulletin 2009/31**

(51) Int Cl.:
***G06F 12/14*** *(2006.01)*

(21) Numéro de dépôt: **06023596.7**

(22) Date de dépôt: **14.11.2006**

(54) **Procédé de gestion de l'accès à une mémoire, au moyen de mots de passe**

Verfahren zur Verwaltung des Zugriffs auf einen Speicher mittels Kennwörtern

Process for managing access to a memory by means of passwords

(84) Etats contractants désignés:
**DE FR GB IT**

(30) Priorité: **16.12.2005   FR 0512782**

(43) Date de publication de la demande:
**18.07.2007   Bulletin 2007/29**

(73) Titulaire: **STMICROELECTRONICS SA**
**92120 Montrouge (FR)**

(72) Inventeur: **Mani, Christophe**
**84300 Cavaillon (FR)**

(74) Mandataire: **Marchand, André**
**OMNIPAT,**
**24 Place des Martyrs de la Résistance**
**13100 Aix-en-Provence (FR)**

(56) Documents cités:
**GB-A- 2 248 324          US-A- 5 469 564**

**Description**

La présente invention concerne un procédé de gestion de l'accès à une mémoire au moyen de mots de passe, et un circuit intégré mettant en oeuvre ce procédé.

Un procédé du type précité est décrit par le document US 5 969 564.

La présente invention concerne notamment les circuits intégrés à mémoire du type "multi-utilisateurs", tels les circuits intégrés sans contact présents dans des étiquettes électroniques ("tags").

Les étiquettes électroniques sans contact sont fréquemment utilisées comme moyen d'identification et de traçabilité de produits. Dans ce cadre, des intervenants différents peuvent être amenés à écrire ou lire des données enregistrées dans les étiquettes. Par exemple, un fabricant, après avoir apposé une étiquette sans contact sur le produit qu'il vient de fabriquer, écrit dans la mémoire du circuit intégré de l'étiquette le numéro de série du produit, le modèle et le type de produit, sa date de fabrication, etc.. Le distributeur du même produit écrit ensuite dans l'étiquette des données qui lui sont propres, par exemple la date d'achat, les références commerciales du produit, la destination du produit, etc. Enfin, le revendeur peut lui-même souhaiter écrire dans l'étiquette des données qui lui sont propres, par exemple la date de réception du produit, le prix d'achat et le prix de vente du produit, etc.. Ainsi, trois utilisateurs différents doivent se partager l'espace mémoire du circuit intégré.

Afin que les données écrites par chaque utilisateur soient protégées contre des tentatives d'accès par des tiers non habilités, il est habituel de prévoir un mécanisme de protection par mot de passe. De nombreux circuits intégrés sans contact comportent ainsi un mot de passe unique devant être présenté avant chaque accès à la mémoire. Toutefois, pour éviter que le même mot de passe soit partagé par plusieurs utilisateurs, il est également connu de diviser l'espace mémoire en plusieurs secteurs pouvant chacun être protégé par un mot de passe déterminé.

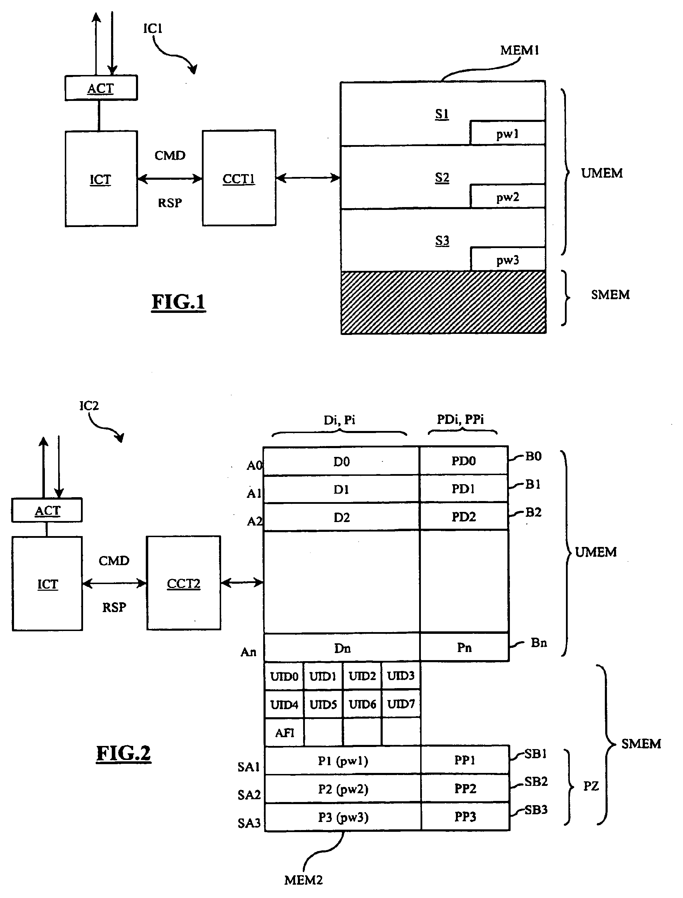

La figure 1 illustre schématiquement la structure d'un circuit intégré sans contact IC1 de type RFID (Radio Frequency Identification) utilisant plusieurs mots de passe. Le circuit intégré comprend un circuit d'interface de communication sans contact ICT, un circuit de contrôle CCT1 et une mémoire MEM1 effaçable et programmable électriquement. Le circuit d'interface ICT est relié à un circuit d'antenne ACT pour recevoir ou émettre des données sans contact. Le circuit de contrôle CCT1 reçoit, via le circuit d'interface ICT, des commandes CMD d'écriture ou de lecture de la mémoire, et renvoie des réponses RSP via le circuit ICT. La mémoire MEM1 comprend une zone mémoire utilisateur UMEM et une zone mémoire système SMEM, représentée en traits hachurés. La zone système comprend généralement des données utilisées par le circuit de contrôle CCT1 pour mettre en oeuvre le protocole de communication sans contact.

La zone mémoire utilisateur UMEM est scindée en plusieurs secteurs de même taille, par exemple trois secteurs S1, S2, S3 pouvant généralement recevoir chacun quelques dizaines à quelques centaines d'octets. Dans chaque secteur S1, S2, S3 se trouve un emplacement réservé recevant un mot de passe, respectivement pw1, pw2, pw3.

Chaque accès à la mémoire, par exemple pour la lecture ou l'écriture d'un mot, est effectué en envoyant au circuit intégré une commande de lecture ou d'écriture comprenant l'adresse du mot (qui inclut l'adresse du secteur dans lequel se trouve le mot) ainsi que le mot de passe du secteur. Avant d'exécuter la commande, le circuit CCT1 lit le mot de passe dans le secteur et le compare avec le mot de passe présent dans la commande. Si le résultat de la comparaison est positif, la commande est exécutée. Dans le cas contraire, le circuit CCT1 renvoie un code d'erreur.

A la mise en service du circuit intégré IC1, la zone mémoire UMEM est vierge et les mots de passe sont égaux à une valeur par défaut, généralement 0. Le premier utilisateur choisit l'un des secteurs, généralement le premier secteur S1, y inscrit son mot de passe puis les données de l'application. Le second utilisateur fait de même avec le secteur S2 et le troisième utilisateur fait de même avec le dernier secteur S3. Chaque utilisateur dispose ainsi d'un espace mémoire réservé protégé par un mot de passe et peut à loisir y accéder pour lire ou écrire des données.

Cette méthode de partage de l'espace mémoire présente toutefois divers inconvénients. D'une part, le cloisonnement de l'espace mémoire en secteurs de même taille ne permet pas d'occuper l'espace mémoire de façon optimale, du fait que chaque utilisateur n'a pas nécessairement le même nombre de données à écrire. Ainsi, un utilisateur peut n'utiliser qu'une faible partie du secteur qui lui a été alloué tandis qu'un autre utilisateur peut être gêné par le manque d'espace du secteur qui lui est alloué. Dans ce cas, l'espace mémoire non utilisé par le premier utilisateur ne peut pas être utilisé par le second utilisateur, d'où un gaspillage important de l'espace mémoire.

D'autre part, un utilisateur (par exemple le fabricant) peut souhaiter qu'un autre utilisateur (par exemple le grossiste) puisse sélectivement lire certaines données qu'il a enregistrées dans la mémoire, mais pas toutes les données.

Une solution envisageable pour répondre à ce besoin est de subdiviser l'espace mémoire utilisateur UMEM en secteurs de plus petite taille et en plus grand nombre, par exemple quinze secteurs au lieu de trois. Ainsi, si les besoins du premier utilisateur sont faibles en termes d'espace mémoire, le premier utilisateur n'utilisera qu'un faible nombre de secteurs, le reste de l'espace mémoire étant laissé à la disposition des autres utilisateurs. De plus, le premier utilisateur peut révéler aux autres utilisateurs les mots de passe de certains secteurs, pour que ces derniers puissent lire ces secteurs.

Toutefois, cette solution présente un inconvénient majeur : lorsque le nombre de secteurs augmente, le nombre de mots de passe augmente proportionnellement ainsi que le pourcentage de l'espace mémoire occupé par les mots de passe, qui peuvent comprendre plusieurs octets chacun.

Ainsi, un objectif général de la présente invention est de prévoir un procédé permettant à plusieurs utilisateurs de partager une mémoire sans augmenter de façon rédhibitoire l'espace mémoire occupé par des mots de passe.

Un objectif secondaire de la présente invention est de prévoir un procédé de gestion des droits d'accès à un espace mémoire partageable, qui offre une grande souplesse d'emploi et permette notamment de gérer distinctement des droits d'accès en lecture et des droits d'accès en écriture.

Au moins un objectif de la présente invention est atteint par la prévision d'un procédé de gestion de l'accès à un espace mémoire partageable par plusieurs utilisateurs, au moyen d'une pluralité de mots de passe, comprenant les étapes consistant à : définir un nombre maximal de mots de passe, prévoir une zone de stockage des mots de passe, diviser l'espace mémoire partageable en une pluralité de blocs en nombre supérieur au nombre maximal de mots de passe, prévoir, dans chaque bloc, un champ de paramétrage de la protection du bloc, prévoir, dans chaque champ de paramétrage, un index binaire de taille inférieure à la taille d'un mot de passe et désignant un mot de passe affecté à la protection du bloc, un même mot de passe pouvant être utilisé pour protéger plusieurs blocs, et attribuer à chaque bloc des droits d'accès nécessitant la présentation d'un mot de passe correspondant au mot de passe désigné par l'index présent dans le champ de paramétrage du bloc.

Selon un mode de réalisation, le procédé comprend une étape consistant à prévoir, dans le champ de paramétrage de chaque bloc, un premier paramètre binaire définissant les droits d'accès au bloc après présentation d'un mot de passe correspondant au mot de passe désigné par l'index, et distinguant des droits d'accès au bloc en lecture et des droits d'accès au bloc en écriture.

Selon un mode de réalisation, le premier paramètre binaire définit également des droits d'accès au bloc sans présentation du mot de passe.

Selon un mode de réalisation, le procédé comprend une étape consistant à prévoir, dans le champ de paramétrage de chaque bloc, un second paramètre binaire présentant une première valeur qui autorise l'accès au bloc en écriture et en lecture quelle que soit la valeur du premier paramètre binaire, et une seconde valeur qui valide les effets du premier paramètre binaire sur les droits d'accès au bloc.

Selon un mode de réalisation, une valeur de l'index signifie qu'aucun mot de passe n'est attribué au bloc.

Selon un mode de réalisation, le bloc est verrouillé en écriture lorsque le second paramètre binaire présente la seconde valeur et lorsque l'index indique qu'aucun mot de passe n'est attribué au bloc.

Selon un mode de réalisation, la taille totale du champ de paramétrage d'un bloc est inférieure à la taille d'un mot de passe.

Selon un mode de réalisation, les droits d'accès en écriture conférés au champ de paramétrage d'un bloc sont identiques aux droits d'accès en écriture que le champ de paramétrage confère au bloc dans lequel il se trouve.

Selon un mode de réalisation, la zone de stockage des mots de passe comprend une pluralité de blocs de mots de passe comprenant chacun un champ de mot de passe et un champ de paramétrage définissant les droits d'accès au bloc de mot de passe.

Selon un mode de réalisation, la zone de stockage des mots de passe n'est accessible qu'au moyen de commandes spécifiques d'écriture des mots de passe.

Selon un mode de réalisation, l'accès aux blocs de l'espace mémoire partageable s'effectue par session, l'ouverture d'une session comprenant une étape de présentation, par l'utilisateur, d'un mot de passe utilisateur, au moins une étape de comparaison du mot de passe présenté avec au moins un mot de passe présent dans la zone de stockage des mots de passe, et une étape de mémorisation du résultat de la comparaison, au moins si ce résultat est positif.

Selon un mode de réalisation, une session est interrompue lorsqu'un utilisateur présente un nouveau mot de passe ou lorsque l'espace mémoire est mis hors tension.

Selon un mode de réalisation, la mémorisation du résultat de la comparaison des mots de passe comprend une étape consistant à charger dans un registre de référence une valeur binaire égale à un index désignant un bloc de mot de passe, et le traitement d'une demande d'accès en lecture ou écriture à un bloc de l'espace mémoire partageable comprend une étape de comparaison de l'index présent dans le champ de paramétrage du bloc visé au contenu du registre de référence, le mot de passe du bloc visé par la demande d'accès étant considéré comme ayant été valablement présenté si le résultat de la comparaison est positif.

L'invention concerne également un circuit intégré comprenant une mémoire et un circuit de contrôle pour contrôler l'accès à la mémoire, la mémoire comprenant un espace mémoire partageable par plusieurs utilisateurs, le circuit de contrôle comprenant des moyens pour comparer des mots de passe fournis par des utilisateurs et des mots de passe présents dans la mémoire, dans lequel la mémoire comprend une zone de stockage des mots de passe définissant un nombre maximal de mots de passe, l'espace mémoire est partagé en une pluralité de blocs en nombre supérieur au nombre maximal de mots de passe, chaque bloc comprend un champ de paramétrage de la protection du bloc, chaque champ de paramétrage d'un bloc comprend un index binaire de taille inférieure à la taille d'un mot de passe et désignant un mot de passe affecté à la protection du bloc, un même mot de passe pouvant être utilisé pour protéger plusieurs blocs, et le circuit de contrôle est agencé pour attribuer à chaque bloc des droits d'accès nécessitant la présentation d'un mot de passe correspondant au mot de passe désigné par l'index présent dans le champ de paramétrage du bloc.

Selon un mode de réalisation, le champ de paramétrage de chaque bloc comprend en outre un premier paramètre binaire définissant les droits d'accès au bloc après présentation d'un mot de passe correspondant au mot de passe désigné par l'index, et distinguant des droits d'accès au bloc en lecture et des droits d'accès au bloc en écriture.

Selon un mode de réalisation, le premier paramètre binaire définit également des droits d'accès au bloc sans présentation d'un mot de passe.

Selon un mode de réalisation, le champ de paramétrage de chaque bloc comprend un second paramètre binaire présentant une première valeur qui autorise l'accès au bloc en écriture et en lecture quelle que soit la valeur du premier paramètre binaire, et une seconde valeur qui valide les effets du premier paramètre binaire sur les droits d'accès au bloc.

Selon un mode de réalisation, l'index de chaque bloc peut être porté à une valeur signifiant qu'aucun mot de passe n'est attribué au bloc.

Selon un mode de réalisation, un bloc est verrouillé en écriture lorsque le second paramètre binaire présente la seconde valeur et lorsque l'index indique qu'aucun mot de passe n'est attribué au bloc.

Selon un mode de réalisation, la taille totale du champ de paramétrage d'un bloc est inférieure à la taille d'un mot de passe.

Selon un mode de réalisation, les droits d'accès en écriture du champ de paramétrage d'un bloc sont identiques aux droits d'accès en écriture que le champ de paramétrage confère au bloc dans lequel il se trouve.

Selon un mode de réalisation, la zone de stockage des mots de passe comprend une pluralité de blocs recevant chacun un mot de passe et comprenant chacun un champ de paramétrage définissant les droits d'accès au bloc.

Selon un mode de réalisation, la zone de stockage des mots de passe est agencée dans une zone système de la mémoire, et n'est accessible aux utilisateurs qu'au moyen de commandes spécifiques d'écriture des mots de passe.

Selon un mode de réalisation, l'accès aux blocs de l'espace mémoire partageable s'effectue par session, le circuit de contrôle étant agencé pour exécuter une commande de présentation d'un mot de passe utilisateur, et, si le mot de passe utilisateur est identique à un mot de passe présent dans la zone de stockage des mots de passe, autoriser l'utilisateur à accéder aux blocs dont l'index désigne ce mot de passe pour toute la durée d'une session, sans exiger la présentation du mot de passe à chaque accès aux blocs.

Selon un mode de réalisation, le circuit de contrôle est agencé pour interrompre une session lorsqu'un utilisateur présente un nouveau mot de passe ou lorsque le circuit intégré est mis hors tension.

Selon un mode de réalisation, le circuit de contrôle est agencé pour, sur réception de la commande de présentation d'un mot de passe, comparer le mot de passe utilisateur et un mot de passe présent dans un bloc de mot de passe et, si le résultat de la comparaison est positif, charger dans un registre de référence une valeur binaire égale à un index désignant le bloc de mot de passe, et sur réception d'une commande de lecture ou d'écriture d'un bloc de l'espace mémoire partageable, comparer l'index présent dans le bloc visé par la commande de lecture ou d'écriture au contenu du registre de référence, et considérer que le mot de passe du bloc visé par la commande a été valablement présenté si le résultat de la comparaison est positif.

Ces objets, caractéristiques et avantages ainsi que d'autres de la présente invention seront exposés plus en détail dans la description suivante du procédé de l'invention et d'un exemple de réalisation d'un circuit intégré mettant en oeuvre le procédé, faite à titre non limitatif en relation avec les figures jointes parmi lesquelles :

- la figure 1 précédemment décrite représente schématiquement la structure d'un circuit intégré sans contact ayant une mémoire partageable,
- la figure 2 représente schématiquement la structure d'un circuit intégré sans contact selon l'invention ayant une mémoire partageable et mettant en oeuvre le procédé de l'invention,
- la figure 3 représente un exemple de réalisation du circuit intégré de la figure 2 dans lequel le circuit intégré comprend un circuit de gestion de la mémoire à logique câblée, et représente certains éléments de ce circuit de gestion,
- la figure 4 est un organigramme décrivant l'exécution par le circuit intégré de la figure 3 d'une commande de présentation d'un mot de passe,
- la figure 5A est un organigramme décrivant l'exécution par le circuit intégré de la figure 3 d'une commande d'écriture d'un bloc de données, et
- la figure 5B est un organigramme décrivant l'exécution par le circuit intégré de la figure 3 d'une commande de lecture d'un bloc de données.

La figure 2 représente schématiquement la structure d'un circuit intégré sans contact IC2 selon l'invention. De façon en soi classique, le circuit intégré IC2 comprend un circuit d'interface de communication sans contact ICT, un circuit de contrôle CCT2 et une mémoire MEM2 effaçable et programmable électriquement. Le circuit d'interface ICT est relié à un circuit d'antenne ACT du type à couplage inductif (comportant une bobine d'antenne) ou du type UHF (comportant une antenne dipolaire) pour recevoir des données par couplage inductif ou par modulation de champ électrique, et émettre des données par modulation de charge ou par modulation du coefficient de réflexion du circuit d'antenne ("backscattering"). Le circuit de contrôle CCT2 est un circuit à logique câblée ou à microprocesseur, et la mémoire MEM2 est de type EEPROM ou FLASH.

Le format des commandes reçues et des réponses émises via le circuit ICT, ainsi que le protocole de communication sans contact utilisé, sont de préférence déterminés par une norme, par exemple la norme ISO 15693, la norme ISO 14443, la norme ISO 18000-3... ou plusieurs normes si le circuit intégré est du type multiprotocole.

La mémoire MEM2 comprend de façon en soi classique une zone mémoire utilisateur UMEM et une zone mémoire système SMEM. La zone système SMEM comprend des données utilisées par le circuit CCT2 pour mettre en oeuvre le protocole de communication. Ces données sont par exemple l'identifiant unique UID utilisé par divers protocoles anticollision, codé ici sur 8 octets UID0 à UID7, un paramètre AFI et un paramètre DSFID de 1 octet chacun, prévus par les normes ISO 15693 et ISO 18000-3.

Selon l'invention, et comme décrit par le tableau 1 ci-après, la zone mémoire utilisateur UMEM est divisée en une pluralité de blocs de données de même taille, ici n+1 blocs B0, B1, B2...Bn. Chaque bloc Bi (B0, B1,...Bn) est désigné par une adresse Ai (A0, A1,...An) et comprend un champ de données Di (D0, D1,...Dn) et un champ PDi (PD0, PD1,...PDn) permettant de paramétrer la protection du bloc en lecture et en écriture.

Le champ de données Di de chaque bloc Bi a ici une taille de 4 octets, soit 32 bits, et le champ de paramétrage PDi contient ici 5 bits utiles. Pour des raisons purement techniques intervenant lors de la conception de la mémoire, la taille du champ de paramétrage PDi peut être supérieure à 5 bits, et faire par exemple un octet. Les bits non utilisés du champ de paramétrage, réservés pour une utilisation future, seront considérés ici comme n'existant pas, dans un souci de simplicité.

La mémoire MEM2 comprend également une zone de mots de passe PZ pour mémoriser des mots de passe, qui est agencée ici dans la zone mémoire système SMEM. La zone PZ est divisée en blocs de données SBi de même taille que les blocs Bi de la zone mémoire UMEM et comprend ici trois blocs SB1, SB2, SB3 ou "blocs de mots de passe". A l'instar des blocs Bi, chaque bloc SBi (SB1, SB2, SB3) comprend un champ de données Pi (P1, P2, P3) et un champ de paramétrage PPi (PP1, PP2, PP3) permettant de paramétrer la protection du bloc. Le champ de données Pi est un champ de mot de passe et reçoit un mot de passe pwi (pw1, pw2, pw3). Les champs Pi des blocs SBi étant ici de même taille que les champs Di des blocs Bi de la zone mémoire UMEM, les mots de passe sont codés sur 32 bits.

Le contenu des champs de paramétrage PDi et PPi est décrit par le tableau 2 ci-après. Les champs PDi et PPi comprennent chacun un index IDX codé sur deux bits b4, b3, un paramètre PR codé sur deux bits b2, b1, et un bit de verrouillage b0. Ce contenu est une sorte de codage définissant des droits d'accès aux blocs de données ou aux blocs de mots de passe, auquel le circuit de contrôle CCT2 se réfère lorsqu'un utilisateur envoie au circuit intégré une commande de lecture ou d'écriture d'un bloc, pour déterminer si cette commande peut être exécutée ou non.

L'index IDX des blocs de données Bi, s'il est différent de 0, désigne un bloc de mot de passe SBi, conformément à la convention de codage décrite par le tableau 3 ci-après. Le mot de passe pwi présent dans le champ Pi du bloc de mot de passe SBi désigné par l'index IDX est donc considéré comme le mot de passe attribué au bloc de données Bi pour la gestion des droits d'accès à ce bloc. L'index IDX des blocs de mots de passe SBi, s'il est différent de "00", désigne également un bloc de mot de passe SBi, le choix étant laissé à l'utilisateur de faire en sorte que l'index d'un bloc de mot de passe désigne le bloc mot de passe dans lequel il se trouve, ou désigne un autre bloc de mot de passe.

## Tableau 1 : organisation de la mémoire MEM2

| Zone utilisateur UMEM / SMEM | Blocs | Champs de données Di et Pi (32 bits) | | | | Champs de paramétrage PDi et PPi (8 bits) |
|---|---|---|---|---|---|---|
| Zone utilisateur UMEM | B0 | D0 | | | | PD0 |
| | B1 | D1 | | | | PD1 |
| | B2 | D2 | | | | PD2 |
| | | . . . | | | | |
| | Bn | Dn | | | | PDn |
| SMEM | | UID0 | UID1 | UID2 | UID 3 | (non utilisé) |
| | | UID4 | UID5 | UID6 | UID 7 | (non utilisé) |
| | | AFI | DSFID | | | (non utilisé) |
| PZ | SB1 | P1 (pw1) | | | | PP1 |
| | SB2 | P2 (pw2) | | | | PP2 |
| | SB3 | P3 (pw3) | | | | PP3 |

### Tableau 2 : format des champs PDi (PD0 à PDn) et PPi (PP1 à PP3)

| index IDX | | paramètre PR | | bit de verrouillage |
|---|---|---|---|---|
| b4 | b3 | b2 | b1 | b0 |

### Tableau 3 : codage de l'index IDX

| IDX | Mot de passe |
|---|---|
| 00 | le bloc n'est pas protégé par un mot de passe |
| 01 | le bloc est protégé par le mot de passe pw1 présent dans le champ P1 du bloc SB1 |
| 10 | le bloc est protégé par le mot de passe pw2 présent dans le champ P2 du bloc SB2 |
| 11 | le bloc est protégé par le mot de passe pw3 présent dans le champ P3 du bloc SB3 |

Le paramètre PR définit des droits d'accès au bloc de la manière décrite par le tableau 4 ci-après, tout en distinguant d'une part les droits d'accès en lecture et les droits d'accès en écriture, et d'autre part les droits d'accès accordés à un utilisateur ayant présenté un mot de passe valide et les droits d'accès accordés à un utilisateur n'ayant pas présenté le mot de passe attribué au bloc ou ayant présenté un mot de passe erroné (un mot de passe est valide s'il est égal au mot de passe attribué au bloc, soit le mot de passe désigné par l'index IDX présent dans le bloc).

**Tableau 4 : codage des champs PDi (PD0 à PDn) et PPi (PP1 à PP3)**

| b0 | b2 b1 (PR) | b4 b3 (IDX) | Mot de passe non présenté | | Mot de passe présenté | |
|----|------------|-------------|---------------------------|---|------------------------|---|
| | | | Accessible en lecture | Accessible en écriture | Accessible en lecture | Accessible en écriture |
| 0 | xx | xx | OUI | OUI | OUI | OUI |
| 1 | xx | 00 | OUI | **NON** | OUI | **NON** |
| 1 | 00 | 01, 10, 11 | OUI | **NON** | OUI | OUI |
| 1 | 01 | 01, 10, 11 | OUI | OUI | OUI | OUI |
| 1 | 10 | 01, 10, 11 | **NON** | **NON** | OUI | OUI |
| 1 | 11 | 01, 10, 11 | **NON** | **NON** | OUI | **NON** |

La protection en écriture définie par le champ de paramétrage PDi d'un bloc de données Bi ou par le champ de paramétrage PPi d'un bloc de mot de passe SBi, s'applique ici à l'ensemble du bloc concerné, et concerne donc également le champ de paramétrage PDi ou PPi lui-même. Ainsi, un bloc de données ou un bloc de mot de passe qui est verrouillé en écriture avec ou sans mot de passe (PR=11) ne peut plus être rendu accessible en écriture, y compris par l'utilisateur détenant le mot de passe.

De même, lorsque le bit de verrouillage b0 d'un bloc a été mis à 1 alors que l'index IDX du bloc indique qu'aucun mot de passe n'a été attribué au bloc (IDX=00, Cf. tableau 3 et tableau 4), le bloc est définitivement verrouillé en écriture mais reste accessible en lecture. Aucun mot de passe ne peut donc être attribué ultérieurement à ce bloc. Par contre, si un mot de passe a été attribué au bloc (IDX = 01, 10 ou 11) ou est attribué au bloc au moment ou le bit b0 est mis à 1, la mise à 1 du bit b0 permet de valider la règle d'attribution de droits d'accès définie par le paramètre PR.

Il est par contre préféré de conserver la possibilité de lire les champs de paramétrage PDi des blocs de données Bi, y compris lorsque les champs de données Di correspondants ne sont pas accessibles en lecture. Ainsi, lorsque b2 b1 b0 = 111 (dernière ligne du tableau 4) ou b2 b1 b0 = 101 (avant-dernière ligne du tableau 4), le champ de paramétrage PDi reste accessible en lecture à l'utilisateur authentifié ou non authentifié.

De façon générale, l'invention permet de réduire le nombre de mots de passe tout en augmentant la finesse du découpage de la mémoire utilisateur UMEM, et tout en offrant une gestion des droits d'accès d'une grande souplesse. Grâce à l'invention, chaque mot de passe pwi peut être utilisé pour protéger l'un quelconque des blocs de données Bi ou l'un quelconque des blocs de mots de passe Pi. Le paramètre PR permet en outre de définir des droits différents en lecture et écriture et des droits différents pour l'utilisateur disposant du mot de passe et celui ne disposant pas du mot de passe.

Chaque utilisateur peut ainsi utiliser un ou plusieurs mots de passe et accorder à l'utilisateur suivant des droits de lecture sur certains blocs en lui confiant l'un des mots de passe utilisés. Lorsque le circuit intégré est mis en service, les champs de paramétrage PDi des blocs de données Bi et les champs de paramétrage PPi des blocs de mots de passe SBi sont tous par défaut à 0, ainsi que les champs de mot de passe Pi. Ainsi, le premier utilisateur peut occuper à sa guise un ou plusieurs blocs de données et paramétrer la protection de ces blocs. L'utilisateur peut également écrire son ou ses mots de passe dans les blocs de mots de passe et définir les droits d'accès aux mots de passe, notamment verrouiller les blocs de mots de passe pour que personne ne puisse modifier ultérieurement les mots de passe, y compris lui-même.

De plus, la protection des blocs de mots de passe SBi pouvant être indexée sur des mots de passe présents dans d'autres blocs de mots de passe, l'utilisateur peut décider de protéger un mot de passe secondaire au moyen d'un mot de passe principal (par exemple un mot de passe administrateur) présent dans un autre bloc de mot de passe. L'utilisateur peut alors fournir le mot de passe secondaire à un tiers sans révéler le mot de passe principal, sans prendre le risque que le tiers modifie le mot de passe secondaire et sans être obligé de verrouiller le mot de passe secondaire en écriture pour l'utilisateur authentifié, pour se réserver la possibilité de le modifier ultérieurement.

La taille des champs de paramétrage des blocs de données (ici 5 bits) étant nettement inférieure à la taille des mots de passe (ici 32 bits), et le nombre de mots de passe (ici 3) étant nettement inférieur au nombre de blocs de données (par exemple n+1=256), le procédé de gestion des droits d'accès selon l'invention limite l'espace mémoire occupé par les mots de passe tout en offrant une granularité très fine dans le découpage de la mémoire (découpage bloc par bloc) permettant d'optimiser le remplissage de la zone mémoire utilisateur UMEM. Par exemple, un premier utilisateur ayant utilisé le premier bloc de mot de passe SB1 et enregistré des données dans des blocs B0, B1, B2 peut ensuite accéder à la mémoire et utiliser par exemple des blocs B250, B251 (en désignant son mot de passe initial comme mot de passe attribué à ces blocs, au moyen de l'index IDX) si entre temps d'autres utilisateurs ont occupé des blocs B3 à B249. La présente invention permet donc d'entrelacer des données utilisateur ayant des mots de passe différents.

La zone PZ étant agencée ici dans la zone mémoire système SMEM, les blocs de mots de passe SBi sont désignés par des adresses système SAi (ici SA1, SA2, SA3) qui ne sont pas accessibles à l'utilisateur. On définit ainsi, selon l'invention, des commandes WRITE_PASSWORD et LOCK_PASSWORD dédiées respectivement à l'écriture et au verrouillage des mots de passe et exécutées par le circuit de contrôle CCT2. Pour la mise en oeuvre de ces commandes, les blocs de mots de passe SBi sont désignés par un numéro de bloc NUMBi (ici NUMB1, NUMB2, NUMB3) et le numéro de bloc est converti en adresse système par le circuit CCT2.

Commande WRITE_PASSWORD

Cette commande est utilisée pour écrire ou rafraîchir un mot de passe de 32 bits dans l'un des champs Pi de la zone PZ. Après écriture du bloc, le mot de passe doit être activé au moyen de la commande LOCK_PASSWORD décrite ci-après. Selon les droits d'accès définis par le paramètre PR du champ de paramétrage PPi correspondant, il est possible de modifier la valeur du mot de passe après une commande WRITE_PASSWORD valide. Cette commande comprend au minimum le code de la commande, ou $CODE_{WP}$, le numéro du bloc visé, ou NUMBi, et les 32 bits du mot de passe pwi (pw1, pw2, pw3) à écrire. Elle se présente ainsi sous la forme suivante :

$$[CODE_{WP}, \ NUMBi, \ pwi]$$

Commande LOCK PASSWORD

Cette commande est prévue pour agir sur le champ de paramétrage PPi des blocs de mots de passe SBi. Les bits b1 à b4 sont concernés par cette commande, soit le paramètre PR et l'index IDX. Après réception de cette commande, le bit de verrouillage b0 est automatiquement mis à 1 par le circuit CCT2 pour activer le contrôle, par le paramètre PR, des droits d'accès au mot de passe, ou pour bloquer le bloc de mot de passe visé si l'index IDX est égal à 0. Après application de cette commande, la protection du bloc telle que définie par le paramètre PR est donc activée et il n'est pas possible de remettre le bit de verrouillage b0 à 0. Ainsi, si l'index IDX est porté à la valeur "00" ou si le paramètre PR est porté à la valeur "11", le mot de passe correspondant est définitivement verrouillé en écriture. Cette commande comprend au minimum le code de la commande ou $CODE_{LP}$, le numéro du bloc de mot de passe visé, ou NUMBi, et les bits b1 à b4. Elle se présente ainsi sous la forme suivante :

$$[CODE_{LP}, \ NUMBi, \ b1-b4]$$

Une commande de lecture des mots de passe peut également être prévue, afin que l'utilisateur puisse vérifier la bonne exécution de la commande WRITE_PASSWORD.

Par ailleurs, afin de faciliter la gestion des droits d'accès telle que définie par le tableau 4, une commande de présentation du mot de passe de l'utilisateur, ou commande PRESENT_PASSWORD, est avantageusement prévue par l'invention.

Commande PRESENT_PASSWORD

Cette commande est utilisée pour présenter un mot de passe utilisateur pwu au circuit de contrôle CCT2 en indiquant avec quel mot de passe pwi présent dans la zone PZ le mot de passe présenté pwu doit être comparé. Cette commande comprend au minimum le code de la commande ou $CODE_{PP}$, le numéro du bloc contenant le mot de passe visé pwi, ou NUMBi, et le mot de passe présenté pwu. Elle se présente ainsi sous la forme suivante :

$$[CODE_{LP}, \ NUMBi, \ pwu]$$

Lorsque le mot de passe présenté correspond au mot de passe visé, une session d'accès est ouverte à l'utilisateur pour tous les blocs ayant ce mot de passe (c'est-à-dire dont l'index IDX désigne ce mot de passe), les droits d'accès à chaque bloc pouvant toutefois être différents en fonction du bit de verrouillage b0 ou du paramètre PR de chaque bloc. Ainsi, il n'est pas nécessaire que l'utilisateur présente son mot de passe chaque fois qu'il envoie une commande de lecture ou d'écriture.

Après exécution de cette commande, le résultat de la comparaison entre le mot de passe cible pwi et le mot de passe utilisateur pwu est mémorisé par le circuit de contrôle CCT2, pour toute la durée de la session. Ainsi, la session s'interrompt à la mise hors tension du circuit intégré (qui intervient par exemple lorsque le circuit intégré est de type passif et se trouve en dehors du champ d'interrogation d'un lecteur, à partir duquel sa tension d'alimentation est extraite). La session est également interrompue lorsque l'utilisateur présente un nouveau mot de passe, au moyen de la commande PRESENT_PASSWORD.

Des commandes similaires peuvent être prévues pour gérer les champs de paramétrage PDi des blocs de données Bi. Notamment, une commande LOCK_DATABLOCK peut être prévue.

### Commande LOCK_DATABLOCK

Cette commande est prévue pour agir sur le champ PDi des blocs de données Bi. Comme précédemment, les bits b1 à b4 sont concernés par cette commande, soit le paramètre PR et l'index IDX. Cette commande agit sur le champ PDi de la même manière que la commande LOCK_PASSWORD agit sur le champ PPi, et ne sera donc pas décrite en détail. Cette commande comprend au minimum le code de la commande ou $CODE_{LD}$, l'adresse Ai du bloc de donnée visé dans la mémoire UMEM, et les bits b1 à b4. Elle se présente ainsi sous la forme suivante :

$$[CODE_{LP}, \ Ai, \ b1-b4]$$

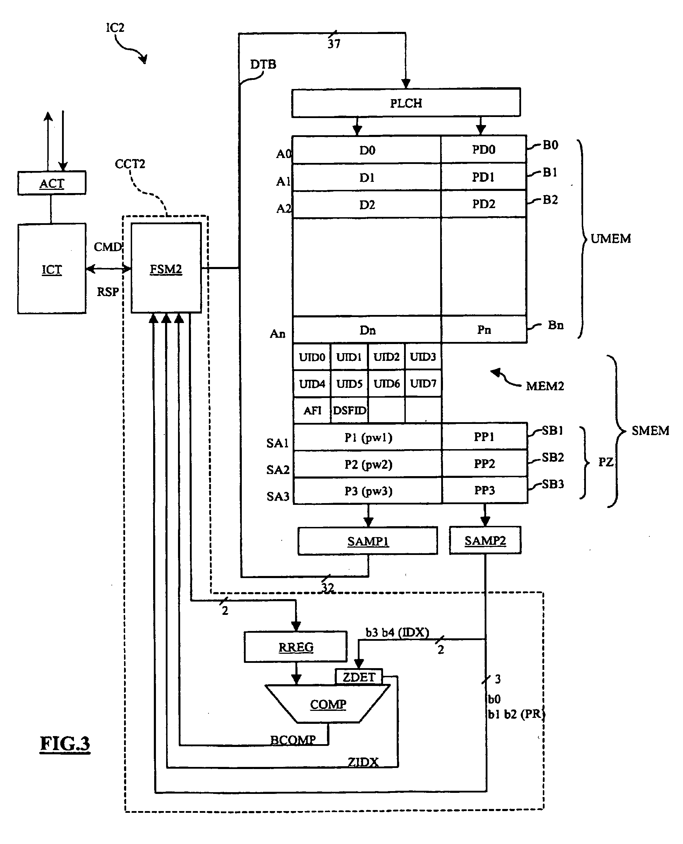

La figure 3 illustre un mode de réalisation du circuit IC2 dans lequel le circuit de contrôle CCT2 est réalisé en logique câblée. Le coeur du circuit CCT2 est une machine logique FSM2 à nombre d'états fini ("Finite State Machine") qui est conçue pour exécuter des commandes de lecture et d'écriture de la mémoire ainsi que les commandes spécifiques décrites plus haut. La mémoire MEM2 comprend un circuit PLCH dont une entrée est reliée à un bus de donnée DTB de 37 bits (32 bits pour les données et 5 bits pour le champ de paramétrage) et dont une sortie est reliée au plan mémoire de la mémoire MEM2, comprenant un ensemble de cellules mémoire de type EEPROM agencées de façon matricielle. Le circuit PLCH comprend classiquement des verrous de programmation et reçoit les données à écrire dans la mémoire. La mémoire MEM2 comprend également un premier groupe d'amplificateurs de lecture SAMP1 pour lire les champs de données Di ou les champs de mot de passe Pi, et un second groupe d'amplificateurs de lecture SAMP2 prévu pour lire les 5 bits des champs de paramétrage PDi ou PPi des blocs de données ou des blocs de mot de passe. La mémoire comprend également un décodeur d'adresse (décodeur de ligne de mot) permettant de sélectionner un bloc en lecture ou en écriture, qui n'a pas été représenté dans un souci de lisibilité de la figure.

Le groupe SAMP2 fournit ainsi les bits b0 à b4 lus dans un bloc du plan mémoire. Les bits b0 à b2 sont envoyés à la machine logique FSM2 pour être testés. Les bits b3 et b4, formant l'index IDX, sont appliqués à une première entrée d'un comparateur logique COMP dont la seconde entrée reçoit le contenu d'un registre de référence RREG contrôlé par la machine logique FSM2. La première entrée du comparateur COMP comporte également un détecteur de zéro ZDET qui fournit un drapeau ZIDX qui est égal à 1 lorsqu'un index lu dans la mémoire est égal à 0 (ce qui signifie que le bloc correspondant n'a pas de mot de passe attribué).

Le registre RREG est utilisé par la machine logique FSM2 pour enregistrer un index IDX correspondant à un mot de passe valablement présenté par un utilisateur au moyen de la commande PRESENT_PASSWORD.

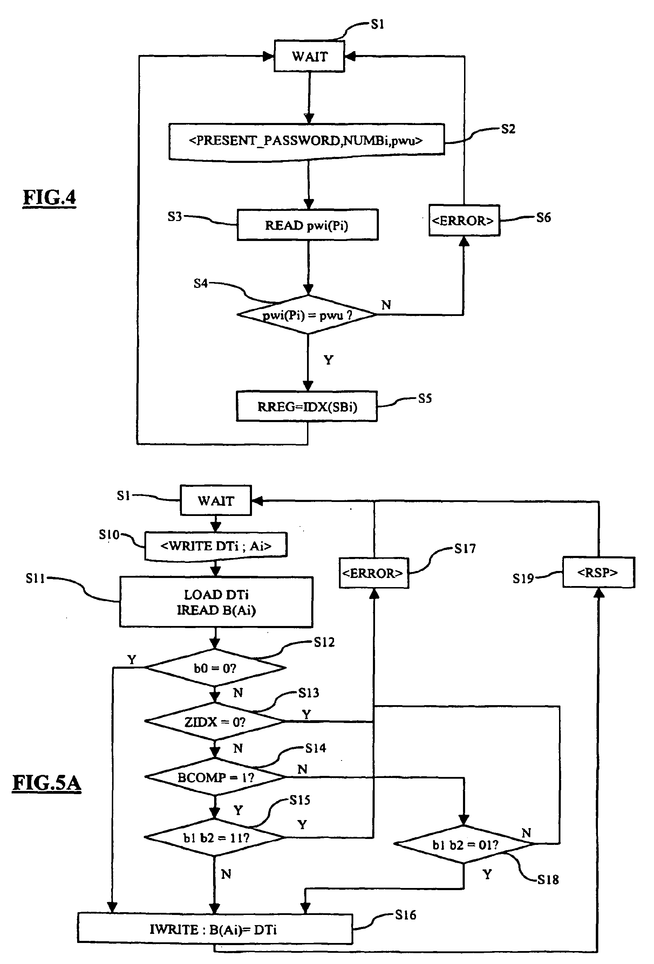

Ceci sera mieux compris en se référant à l'organigramme de la figure 4, qui décrit succinctement les étapes exécutées par la machine logique FSM2 pour mettre à jour le registre RREG en réponse à une commande PRESENT_ PASSWORD. On distingue les étapes suivantes :

```
Etape S1 : WAIT
Etape S2 : <PRESENT_PASSWORD, NUMBi, pwu>
Etape S3 : READ pwi(Pi)
Etape S4 : pwi(Pi) = pwu ?
Etape S5 : RREG=IDX(SBi)
Etape S6 : <ERROR>
```

L'étape S1 est une étape d'attente d'une commande. A l'étape S2, la machine logique reçoit et décode la commande PRESENT_PASSWORD qui comprend le numéro NUMBi du bloc de mot de passe visé ainsi que le mot de passe de l'utilisateur pwu. A l'étape S3, la machine logique lit le mot de passe pwi(Pi) se trouvant dans le champ Pi du bloc de mot de passe SBi visé par le numéro de bloc NUMBi, soit le champ Pi(SBi(NUMBi)). A l'étape S4, la machine logique compare ce mot de passe avec le mot de passe pwu présenté par l'utilisateur. Si le résultat de la comparaison est positif, la machine logique va à l'étape S5 où elle charge dans le registre RREG une valeur d'index IDX désignant le bloc de mot de passe SBi concerné, suivant la convention de codage définie par le tableau 3 ci-dessus. Par exemple, si le bloc visé par la commande est le bloc SB1, l'index chargé dans le registre est "01". Dans le cas contraire, la machine logique va à l'étape S6 où elle retourne un message d'erreur via le circuit d'interface ICT.

Après traitement d'une commande PRESENT_PASSWORD valablement présentée, le registre RREG contient ainsi l'index du bloc de mot de passe pour lequel un mot de passe a été présenté, ce qui permet ensuite à la machine logique de ne pas vérifier, à chaque commande de lecture ou d'écriture reçue, si l'utilisateur détient le mot de passe des blocs auxquels il demande l'accès : l'utilisateur est considéré comme authentifié si ces blocs ont le même index que l'index mémorisé dans le registre RREG, et est considéré comme n'ayant pas présenté le mot de passe si les blocs n'ont pas le même index.

Pour fixer les idées, la figure 5A est un organigramme décrivant succinctement les étapes exécutées par la machine logique pour traiter une commande d'écriture d'un bloc de données, en utilisant le registre RREG. On distingue les étapes suivantes :

Etape S1 : WAIT
Etape S10 : <WRITE DTi ; Ai>
Etape S11 : LOAD DTi et IREAD B(Ai)
Etape S12 : b0 = 0?
Etape S13 : ZIDX = 0?
Etape S14 : BCOMP = 1?
Etape S15 : b1 b2 = 11?
Etape S16 : IWRITE : B(Ai)= DTi
Etape S17 : <ERROR>
Etape S18 : b1 b2 = 01?
Etape S19 : <RSP>

Après l'étape d'attente S1, la machine logique reçoit une commande d'écriture de la donnée DTi à l'adresse Ai, soit dans le bloc de données Bi d'adresse Ai. A l'étape S11, la machine logique charge (LOAD) les données DTi dans le circuit PLCH (fig. 3) puis effectue une lecture interne (IREAD) du bloc d'adresse Ai, soit le bloc B(Ai) (ou bloc Bi suivant la notation utilisée plus haut). Le groupe d'amplificateurs de lecture SAMP2 fournit alors les bits b0 à b4. Les bits b3 et b4 (index IDX) sont alors appliqués à l'entrée du comparateur COMP dont la sortie fournit un drapeau BCOMP qui est égal à 1 si la comparaison de l'index IDX avec celui chargé dans le registre RREG est positive. Egalement, le drapeau ZIDX est égal à 0 si l'index lu est égal à "00".

La machine logique détermine d'abord, à l'étape S12, si le bit de verrouillage b0 est égal à 0 ou non. Si b0=0, le bloc visé est libre d'accès (Cf. tableau 4) et la machine logique va à l'étape S16 qui est une étape d'écriture interne (IWRITE) dans le bloc visé B(Ai) des données reçues DTi, qui sont présentes dans le circuit PLCH et prêtes à être enregistrées dans le plan mémoire.

Si le bit b0 n'est pas égal à 0, la machine logique va à l'étape S13 où elle détermine si l'index est égal à 0 ou non en observant la valeur du drapeau ZIDX. Si le drapeau ZIDX est égal à 0, et comme le bit b0 est égal à 1, cela signifie qu'aucun mot de passe n'a été déclaré pour ce bloc et que le bloc est verrouillé en écriture (Cf. tableau 4). La machine logique va alors à l'étape S17 où elle retourne un message d'erreur par l'intermédiaire du circuit d'interface ICT.

Si le drapeau ZIDX n'est pas égal à 0, la machine logique va à l'étape S14 où elle détermine si le drapeau BCOMP est égal à 1 ou non. Si le drapeau BCOMP est égal à 1, la machine logique va à l'étape S15 où elle détermine si les bits b1 et b2 sont égaux à 1 ou non (seul cas de verrouillage en écriture du bloc lorsque la signature a été présentée, Cf. tableau 4).

Si les bits b1 et b2 sont égaux à 1, la machine logique va à l'étape S17 et retourne le message d'erreur. Sinon, elle va à l'étape S16 pour exécuter la commande d'écriture des données DTi dans le bloc B(Ai). Si le drapeau BCOMP est égal à 0, cela signifie que l'utilisateur ayant envoyé la commande n'a pas préalablement déclaré le mot de passe attribué au bloc. La machine logique va alors à l'étape S18 pour déterminer si les bits b1 et b2 sont respectivement égaux à 0 et à 1 (seul cas d'autorisation d'écriture du bloc lorsque la signature n'a pas été présentée, Cf. tableau 4). Si la réponse est positive, la machine logique va à l'étape S16 pour exécuter la commande écriture des données DTi dans le bloc B(Ai). Sinon, elle va à l'étape S17 et retourne le message d'erreur. Après l'étape d'écriture, la machine logique passe par une étape S19 où elle retourne un message RSP indiquant que l'écriture a été effectuée (étape optionnelle), puis retourne à l'étape S1.

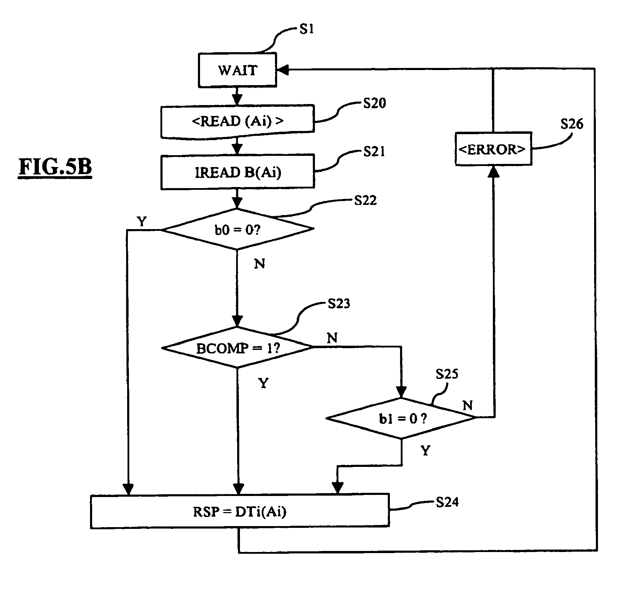

La figure 5B est un organigramme décrivant succinctement les étapes exécutées par la machine logique pour traiter une commande de lecture d'un bloc de données, en utilisant le registre RREG. On distingue les étapes suivantes :

Etape S1 : WAIT

Etape S20 : <READ (Ai)>
Etape S21 : IREAD B(Ai)
Etape S22 : b0 = 0?
Etape S23 : BCOMP = 1?
Etape S25 : b1 = 0 ?
Etape S24: RSP = DTi(Ai)
Etape S26 : <ERROR>

A l'étape S20, la machine logique reçoit une commande de lecture d'un bloc de données B(Ai) d'adresse Ai. A l'étape S21, elle lit les données présentes dans le bloc au moyen du groupe d'amplificateurs de lecture SAMP1 et lit simultanément les bits b0 à b4 au moyen du groupe SAMP2. Le bit b0 est testé à l'étape S22. Si b0 est égal à 0, la machine logique va à l'étape S24 et envoie les données lues DTi(Ai) en réponse à la commande. Si b0 est égal à 1, la machine logique détermine au cours de l'étape S23 si l'utilisateur a préalablement déclaré le mot de passe du bloc en regardant si le drapeau BCOMP est égal à 1 ou non. Si BCOMP est égal à 1, la machine logique va à l'étape S24 et envoie les données lues. Si le bit BCOMP est égal à 0, la machine logique va à l'étape S25 où elle détermine si le bit b1 est à 0 ou non. Si le bit b1 est égal à 0, la machine logique va à l'étape S24 et envoie les données lues. Sinon, elle va à l'étape S26 pour retourner un message d'erreur.

I1 apparaîtra clairement à l'homme de l'art que la présente invention est susceptible de diverses variantes de réalisation, notamment en ce qui concerne le codage du champ de paramétrage, le nombre de bits de paramétrage et l'agencement des blocs de mots de passe. La zone PZ contenant les blocs de mots de passe peut notamment être agencée dans la mémoire utilisateur UMEM et les blocs de mots de passe sont alors accessibles au moyen des commandes de lecture ou d'écriture permettant d'accéder aux blocs de données. Par ailleurs, l'utilisation de plusieurs registres de référence RREG et de plusieurs comparateurs COMP peut permettre d'ouvrir simultanément plusieurs sessions avec plusieurs mots de passe. Egalement, la commande PRESENT_PASSWORD peut être prévue sans indication du bloc de mot de passe cible. Dans ce cas, le circuit de contrôle CCT2 recherche lui-même, parmi les blocs de mots de passe, s'il existe au moins un mot de passe correspondant à celui présenté par l'utilisateur.

Enfin, bien que l'on ait proposé dans ce qui précède de gérer les droits d'accès au moyen du paramètre PR (bit b1, b2) et du bit de verrouillage b0, tout ou partie de ces moyens de contrôle peut être supprimée dans le cadre d'applications où la gestion des accès peut être simplifiée. Pour fixer les idées, le tableau 5 ci-après décrit une gestion simplifiée des droits d'accès aux blocs de données sans utiliser le paramètre PR. Le tableau 6 ci-après décrit une gestion simplifiée des droits d'accès aux blocs de données sans utiliser le bit de verrouillage b0. Le tableau 7 ci-après décrit une gestion simplifiée des droits d'accès aux blocs de données sans utiliser le paramètre PR ni le bit de verrouillage b0. Dans cette dernière variante, la protection est du type "tout ou rien" sans différencier les droits d'accès en lecture ou les droits d'accès en écriture. L'utilisateur peut accéder à un bloc en lecture et en écriture uniquement s'il dispose du mot de passe désigné par l'index.

**Tableau 5 : codage des champs PDi et PPi sans paramètre PR**

| b0 | IDX | Mot de passe non présenté | | Mot de passe présenté | |
|----|-----|---------------------------|---|-----------------------|---|
| | | Accessible en lecture | Accessible en écriture | Accessible en lecture | Accessible en écriture |
| 0 | xx | OUI | OUI | OUI | OUI |
| 1 | 00 | OUI | **NON** | OUI | **NON** |
| 1 | 01, 10, 11 | **NON** | **NON** | OUI | OUI |

**Tableau 6 : codage des champs PDi et PPi sans bit b0**

| PR | IDX | Mot de passe non présenté | | Mot de passe présenté | |
|----|-----|---------------------------|---|-----------------------|---|
| | | Accessible en lecture | Accessible en écriture | Accessible en lecture | Accessible en écriture |
| xx | 00 | OUI | OUI | OUI | OUI |
| 00 | 01, 10, 11 | OUI | **NON** | OUI | OUI |
| 01 | 01, 10, 11 | OUI | OUI | OUI | OUI |

(suite)

| PR | IDX | Mot de passe non présenté | | Mot de passe présenté | |
|---|---|---|---|---|---|
| | | Accessible en lecture | Accessible en écriture | Accessible en lecture | Accessible en écriture |
| 10 | 01, 10, 11 | **NON** | **NON** | OUI | OUI |
| 11 | 01, 10, 11 | **NON** | **NON** | OUI | **NON** |

**Tableau 7 : codage des champs PDi et PPi sans paramètres PR et b0**

| IDX | Mot de passe non présenté | | Mot de passe présenté | |
|---|---|---|---|---|
| | Accessible en lecture | Accessible en écriture | Accessible en lecture | Accessible en écriture |
| 00 | OUI | **NON** | OUI | **NON** |
| 01, 10, 11 | **NON** | **NON** | OUI | OUI |

## Revendications

1. Procédé de gestion de l'accès à un espace mémoire (UMEM) partageable par plusieurs utilisateurs, au moyen d'une pluralité de mots de passe, **caractérisé en ce qu'**il comprend les étapes consistant à :

   - définir un nombre maximal de mots de passe (pw1-pw3),
   - prévoir une zone de stockage des mots de passe (PZ),
   - diviser l'espace mémoire partageable (UMEM) en une pluralité de blocs (B0-Bn) en nombre supérieur au nombre maximal de mots de passe,
   - prévoir, dans chaque bloc, un champ de paramétrage (PD0-PDn) de la protection du bloc,
   - prévoir, dans chaque champ de paramétrage (PD0-PDn), un index binaire (IDX) de taille inférieure à la taille d'un mot de passe et désignant un mot de passe (pw1-pw3) affecté à la protection du bloc, un même mot de passe pouvant être utilisé pour protéger plusieurs blocs, et
   - attribuer à chaque bloc des droits d'accès nécessitant la présentation d'un mot de passe correspondant au mot de passe désigné par l'index (IDX) présent dans le champ de paramétrage (PD0-PDn) du bloc.

2. Procédé selon la revendication 1, comprenant une étape consistant à prévoir, dans le champ de paramétrage (PD0-PDn) de chaque bloc, un premier paramètre binaire (PR) définissant les droits d'accès au bloc après présentation d'un mot de passe correspondant au mot de passe désigné par l'index (IDX), et distinguant des droits d'accès au bloc en lecture et des droits d'accès au bloc en écriture.

3. Procédé selon l'une des revendications 1 et 2 dans lequel le premier paramètre binaire (PR) définit également des droits d'accès au bloc sans présentation du mot de passe.

4. Procédé selon l'une des revendications 1 à 3, comprenant une étape consistant à prévoir, dans le champ de paramétrage (PD0-PDn) de chaque bloc, un second paramètre binaire (b0) présentant une première valeur qui autorise l'accès au bloc en écriture et en lecture quelle que soit la valeur du premier paramètre binaire (PR), et une seconde valeur qui valide les effets du premier paramètre binaire (PR) sur les droits d'accès au bloc.

5. Procédé selon l'une des revendications 1 à 4, dans lequel une valeur de l'index (IDX) signifie qu'aucun mot de passe n'est attribué au bloc.

6. Procédé selon les revendications 4 et 5, dans lequel le bloc est verrouillé en écriture lorsque le second paramètre binaire (b0) présente la seconde valeur et lorsque l'index (IDX) indique qu'aucun mot de passe n'est attribué au bloc.

7. Procédé selon l'une des revendications 1 à 6, dans lequel la taille totale du champ de paramétrage (PD0-PDn) d'un bloc est inférieure à la taille d'un mot de passe.

8. Procédé selon l'une des revendications 1 à 7, dans lequel les droits d'accès en écriture conférés au champ de paramétrage (PD0-PDn) d'un bloc sont identiques aux droits d'accès en écriture que le champ de paramétrage confère au bloc dans lequel il se trouve.

9. Procédé selon l'une des revendications 1 à 8, dans lequel la zone de stockage des mots de passe (PZ) comprend une pluralité de blocs de mots de passe (SB1-SB3) comprenant chacun un champ de mot de passe (P1-P3) et un champ de paramétrage (PP1-PP3) définissant les droits d'accès au bloc de mot de passe.

10. Procédé selon l'une des revendications 1 à 9, dans lequel la zone de stockage des mots de passe (PZ) n'est accessible qu'au moyen de commandes spécifiques d'écriture des mots de passe.

11. Procédé selon l'une des revendications 1 à 10, dans lequel l'accès aux blocs (B0-Bn) de l'espace mémoire partageable (UMEM) s'effectue par session, l'ouverture d'une session comprenant :

   - une étape de présentation, par l'utilisateur, d'un mot de passe utilisateur (pwu),
   - au moins une étape de comparaison du mot de passe présenté (pwu) avec au moins un mot de passe (pw1-pw3) présent dans la zone de stockage des mots de passe (PZ), et
   - une étape de mémorisation du résultat de la comparaison, au moins si ce résultat est positif.

12. Procédé selon la revendication 11, dans lequel une session est interrompue lorsqu'un utilisateur présente un nouveau mot de passe ou lorsque l'espace mémoire est mis hors tension.

13. Procédé selon l'une des revendications 11 et 12, dans lequel :

   - la mémorisation du résultat de la comparaison des mots de passe comprend une étape consistant à charger dans un registre de référence (RREG) une valeur binaire égale à un index (IDX) désignant un bloc de mot de passe, et
   - le traitement d'une demande d'accès en lecture ou écriture à un bloc de l'espace mémoire partageable (UMEM) comprend une étape de comparaison de l'index (IDX) présent dans le champ de paramétrage (PD0-PDn) du bloc visé au contenu du registre de référence (RREG), le mot de passe du bloc visé par la demande d'accès étant considéré comme ayant été valablement présenté si le résultat de la comparaison est positif (BCOMP=1).

14. Circuit intégré (IC2) comprenant une mémoire (MEM2) et un circuit de contrôle (CCT2) pour contrôler l'accès à la mémoire, la mémoire comprenant un espace mémoire (UMEM) partageable par plusieurs utilisateurs, le circuit de contrôle comprenant des moyens pour comparer des mots de passe fournis par des utilisateurs et des mots de passe présents dans la mémoire, **caractérisé en ce que** :

   - la mémoire comprend une zone (PZ) de stockage des mots de passe définissant un nombre maximal de mots de passe (pwl-pw3),
   - l'espace mémoire (UMEM) est partagé en une pluralité de blocs (B0-Bn) en nombre supérieur au nombre maximal de mots de passe,
   - chaque bloc comprend un champ de paramétrage (PD0-PDn) de la protection du bloc,
   - chaque champ de paramétrage (PD0-PDn) d'un bloc comprend un index binaire (IDX) de taille inférieure à la taille d'un mot de passe et désignant un mot de passe (pw1-pw3) affecté à la protection du bloc, un même mot de passe pouvant être utilisé pour protéger plusieurs blocs, et
   - le circuit de contrôle (CCT2) est agencé pour attribuer à chaque bloc des droits d'accès nécessitant la présentation d'un mot de passe correspondant au mot de passe désigné par l'index (IDX) présent dans le champ de paramétrage (PD0-PDn) du bloc.

15. Circuit intégré selon la revendication 14, dans lequel le champ de paramétrage (PD0-PDn) de chaque bloc comprend en outre un premier paramètre binaire (PR) définissant les droits d'accès au bloc après présentation d'un mot de passe correspondant au mot de passe désigné par l'index (IDX), et distinguant des droits d'accès au bloc en lecture et des droits d'accès au bloc en écriture.

16. Circuit intégré selon l'une des revendications 14 et 15, dans lequel le premier paramètre binaire (PR) définit également des droits d'accès au bloc sans présentation d'un mot de passe.

17. Circuit intégré selon l'une des revendications 14 à 16, dans lequel le champ de paramétrage (PD0-PDn) de chaque bloc comprend un second paramètre binaire (b0) présentant une première valeur qui autorise l'accès au bloc en écriture et en lecture quelle que soit la valeur du premier paramètre binaire (PR), et une seconde valeur qui valide les effets du premier paramètre binaire (PR) sur les droits d'accès au bloc.

18. Circuit intégré selon l'une des revendications 14 à 17, dans lequel l'index (IDX) de chaque bloc peut être porté à une valeur signifiant qu'aucun mot de passe n'est attribué au bloc.

19. Circuit intégré selon les revendications 17 et 18, dans lequel un bloc est verrouillé en écriture lorsque le second paramètre binaire (b0) présente la seconde valeur et lorsque l'index (IDX) indique qu'aucun mot de passe n'est attribué au bloc.

20. Circuit intégré selon l'une des revendications 14 à 19, dans lequel la taille totale du champ de paramétrage (PD0-PDn) d'un bloc est inférieure à la taille d'un mot de passe.

21. Circuit intégré selon l'une des revendications 14 à 20, dans lequel les droits d'accès en écriture du champ de paramétrage (PD0-PDn) d'un bloc sont identiques aux droits d'accès en écriture que le champ de paramétrage (PD0-PDn) confère au bloc dans lequel il se trouve.

22. Circuit intégré selon l'une des revendications 14 à 21, dans lequel la zone de stockage des mots de passe (PZ) comprend une pluralité de blocs (SB1-SB3) recevant chacun un mot de passe (pw1-pw3) et comprenant chacun un champ de paramétrage (PP1-PP3) définissant les droits d'accès au bloc.

23. Circuit intégré selon l'une des revendications 14 à 22, dans lequel la zone de stockage des mots de passe (PZ) est agencée dans une zone système (SMEM) de la mémoire, et n'est accessible aux utilisateurs qu'au moyen de commandes spécifiques d'écriture des mots de passe.

24. Circuit intégré selon l'une des revendications 14 à 23, dans lequel l'accès aux blocs (B0-Bn) de l'espace mémoire partageable (UMEM) s'effectue par session, le circuit de contrôle (CCT2) étant agencé pour exécuter une commande de présentation d'un mot de passe utilisateur, et, si le mot de passe utilisateur est identique à un mot de passe présent dans la zone de stockage des mots de passe (PZ), autoriser l'utilisateur à accéder aux blocs (B0-Bn) dont l'index (IDX) désigne ce mot de passe pour toute la durée d'une session, sans exiger la présentation du mot de passe à chaque accès aux blocs.

25. Circuit intégré selon la revendication 24, dans lequel le circuit de contrôle est agencé pour interrompre une session lorsqu'un utilisateur présente un nouveau mot de passe ou lorsque le circuit intégré est mis hors tension.

26. Circuit intégré selon l'une des revendications 24 et 25, dans lequel le circuit de contrôle est agencé pour :

- sur réception de la commande de présentation d'un mot de passe, comparer le mot de passe utilisateur et un mot de passe présent dans un bloc de mot de passe et, si le résultat de la comparaison est positif, charger dans un registre de référence (RREG) une valeur binaire égale à un index (IDX) désignant le bloc de mot de passe, et
- sur réception d'une commande de lecture ou d'écriture d'un bloc de l'espace mémoire partageable, comparer l'index (IDX) présent dans le bloc visé par la commande de lecture ou d'écriture au contenu du registre de référence (RREG), et considérer que le mot de passe du bloc visé par la commande a été valablement présenté si le résultat de la comparaison est positif (BCOMP=1).

## Claims

1. A method for managing the access to a memory space (UMEM) shareable by several users, by means of a plurality of passwords, **characterized in that** it comprises the steps of:

   - defining a maximum number of passwords (pw1-pw3),
   - providing a password storage zone (PZ),
   - dividing the shareable memory space (UMEM) into a plurality of blocks (B0-Bn) greater in number than the maximum number of passwords,
   - providing, in each block, a parameterization field (PD0-PDn) for parameterizing the protection of the block,

- providing, in each parameterization field (PD0-PDn), a binary index (IDX) smaller in size than the password and designating a password (pw1-pw3) assigned to the protection of the block, a same password possibly being used to protect several blocks, and

- allocating, to each block, access rights requiring a password to be presented that corresponds to the password designated by the index (IDX) present in the block parameterization field (PD0-PDn).

2. Method according to claim 1, comprising a step of providing, in the parameterization field (PD0-PDn) of each block, a first binary parameter (PR) defining the access rights to the block after presentation of a password corresponding to the password designated by the index (IDX), distinguishing between read- and write-access rights to the block.

3. Method according to one of claims 1 and 2, wherein the first binary parameter (PR) also defines access rights to the block without presentation of the password.

4. Method according to one of claims 1 to 3, comprising a step of providing, in the parameterization field (PD0-PDn) of each block, a second binary parameter (b0) having a first value that authorizes the read- and write-access to the block whatever the value of the first binary parameter (PR), and a second value that validates the effects of the first binary parameter (PR) on the access rights to the block.

5. Method according to one of claims 1 to 4, wherein a value of the index (IDX) means that no password is allocated to the block.

6. Method according to the claims 4 and 5, wherein the block is write-locked when the second binary parameter (b0) has the second value and when the index (IDX) indicates that no password is allocated to the block.

7. Method according to one of claims 1 to 6, wherein the total size of the parameterization field (PD0-PDn) of a block is smaller than the size of a password.

8. Method according to one of claims 1 to 7, wherein the write-access rights given to the parameterization field (PD0-PDn) of a block are identical to the write-access rights that the parameterization field gives to the block in which it is situated.

9. Method according to one of claims 1 to 8, wherein the password storage zone (PZ) comprises a plurality of password blocks (SB1-SB3) each comprising a password field (P1-P3) and a parameterization field (PP1-PP3) defining the access rights to the password block.

10. Method according to one of claims 1 to 9, wherein the password storage zone (PZ) is only accessible by means of specific write commands for writing the passwords.

11. Method according to one of claims 1 to 10, wherein the blocks (B0-Bn of the shareable memory space (UMEM) are accessed by session, the opening of a session comprising:

- a step of presenting, by the user, a user password (pwu),
- at least one step of comparing the password presented (pwu) with at least one password (pw1- pw3) present in the password storage zone (PZ), and
- a step of storing the result of the comparison, at least if this result is positive.

12. Method according to claim 11, wherein a session is interrupted when a user presents a new password or when the memory space is switched off.

13. Method according to one of claims 11 and 12, wherein:

- the storing of the result of the comparison of the passwords comprises a step of loading into a reference register (RREG) a binary value equal to an index (IDX) designating a password block, and
- the processing of a request for read- or write-access to a block of the shareable memory space (UMEM) comprises a step of comparing the index (IDX) present in the parameterization field (PD0-PDn) of the targeted block with the content of the reference register (RREG), the password of the block targeted by the request for access being considered to have been validly presented if the result of the comparison is positive (BCOMP=1).

**14.** An integrated circuit (IC2) comprising a memory (MEM2) and a control circuit (CCT2) for controlling the access to the memory, the memory comprising a memory space (UMEM) shareable by several users, the control circuit comprising means for comparing passwords supplied by users and passwords present in the memory, **characterized in that:**

- the memory comprises a password storage zone (PZ) defining a maximum number of passwords (pw1-pw3),
- the memory space (UMEM) is divided into a plurality of blocks (B0-Bn) greater in number than the maximum number of passwords,
- each block comprises a parameterization field (PD0-PDn) for parameterizing the protection of the block,
- each parameterization field (PD0-PDn) of a block comprises a binary index (IDX) smaller in size than a password and designating a password (pw1-pw3) assigned to the protection of the block, a same password possibly being used to protect several blocks, and
- the control circuit (CCT2) is arranged for allocating, to each block, access rights requiring a password to be presented that corresponds to the password designated by the index (IDX) present in the block parameterization field (PD0-PDn).

**15.** Integrated circuit according to claim 14, wherein the parameterization field (PD0-PDn) of each block further comprises a first binary parameter (PR) defining the access rights to the block after presentation of a password corresponding to the password designated by the index (IDX), and distinguishing between the read- and write-access rights to the block.

**16.** Integrated circuit according to one of claims 14 and 15, wherein the first binary parameter (PR) also defines access rights to the block without presentation of any password.

**17.** Integrated circuit according to one of claims 14 to 16, wherein the parameterization field (PD0-PDn) of each block comprises a second binary parameter (b0) having a first value that authorizes the read- and write-access to the block whatever the value of the first binary parameter (PR), and a second value that validates the effects of the first binary parameter (PR) on the access rights to the block.

**18.** Integrated circuit according to one of claims 14 to 17, wherein the index (IDX) of each block can be taken to a value meaning that no password is allocated to the block.

**19.** Integrated circuit according to claims 17 and 18, wherein a block is write-locked when the second binary parameter (b0) has the second value and when the index (IDX) indicates that no password is allocated to the block.

**20.** Integrated circuit according to one of claims 14 to 19, wherein the total size of the parameterization field (PD0-PDn) of a block is smaller than the size of a password.

**21.** Integrated circuit according to one of claims 14 to 20, wherein the write-access rights of the parameterization field (PD0-PDn) of a block are identical to the write-access rights that the parameterization field (PD0-PDn) gives to the block in which it is situated.

**22.** Integrated circuit according to one of claims 14 to 21, wherein the password storage zone (PZ) comprises a plurality of blocks (SB1-SB3) each receiving a password (pw1-pw3) and each comprising a parameterization field (PP1-PP3) defining the access rights to the block.

**23.** Integrated circuit according to one of claims 14 to 22, wherein the password storage zone (PZ) is arranged in a system area (SMEM) of the memory, and is only accessible to the users by means of specific write commands for writing the passwords.

**24.** Integrated circuit according to one of claims 14 to 23, wherein the blocks (B0-Bn) of the shareable memory space (UMEM) are accessed by session, the control circuit (CCT2) being arranged for executing a command for presenting a user password, and, if the user password is identical to a password present in the password storage zone (PZ), authorizing the user to access the blocks (B0-Bn) the index (IDX) of which designates this password for the entire duration of a session, without requiring the password to be presented at each access to the blocks.

**25.** Integrated circuit according to claim 24, wherein the control circuit is arranged for interrupting a session when a user presents a new password or when the integrated circuit is switched off.

26. Integrated circuit according to one of claims 24 and 25, wherein the control circuit is arranged for:

- upon receiving the command for presenting a password, comparing the user password with a password present in a password block and, if the result of the comparison is positive, loading into a reference register (RREG) a binary value equal to an index (IDX) designating the password block, and
- upon receiving a read or write command for reading or writing a block of the shareable memory space, comparing the index (IDX) present in the block targeted by the read or write command with the content of the reference register (RREG), and considering that the password of the block targeted by the command has been validly presented if the result of the comparison is positive (BCOMP=1).

**Patentansprüche**

1. Verfahren zur Verwaltung des Zugriffs mittels einer Vielzahl von Passwörtern auf eine von mehreren Benutzern teilbare Speicherstelle (UMEM), **dadurch gekennzeichnet, dass** es die folgenden Schritte umfasst, die darin bestehen,

- eine maximale Anzahl an Passwörtern (pw1-pw3) festzulegen,
- eine Passwortspeicherzone (PZ) vorzusehen,
- die teilbare Speicherstelle (UMEM) in eine Vielzahl von Blöcken (B0-Bn) zu unterteilen, deren Anzahl höher ist als die maximale Passwortanzahl,
- in jedem Block ein Parametrierfeld (PD0-PDn) zur Parametrierung des Blockschutzes vorzusehen,
- in jedem Parametrierfeld (PD0-PDn) einen binären Index (IDX) vorzusehen, dessen Größe kleiner ist als die Grösse eines Passworts und der ein dem Blockschutz zugeordnetes Passwort (pw1-pw3) spezifiziert, wobei ein und dasselbe Passwort zum Schutz mehrerer Blöcke verwendet werden kann, und
- jedem Block Zugriffsrechte zu erteilen, die die Angabe eines Passworts erfordern, welches dem Passwort entspricht, das von dem im Parametrierfeld (PD0-PDn) des Blocks vorhandenen Index (IDX) spezifiziert ist.

2. Verfahren nach Anspruch 1, umfassend einen Schritt, der darin besteht, im Parametrierfeld (PD0-PDn) eines jeden Blocks einen ersten binären Parameter (PR) vorzusehen, der die Zugriffsrechte auf den Block nach Angabe eines Passworts, das dem vom Index (IDX) spezifizierten Passwort entspricht, festlegt und der zwischen Lesezugriffsrechten auf den Block und Schreibzugriffsrechten auf den Block unterscheidet.

3. Verfahren nach einem der Ansprüche 1 und 2, bei dem der erste binäre Parameter (PR) auch Zugriffsrechte auf den Block ohne Angabe des Passworts festlegt.

4. Verfahren nach einem der Ansprüche 1 bis 3, umfassend einen Schritt, der darin besteht, im Parametrierfeld (PD0-PDn) jedes Blocks einen zweiten binären Parameter (b0) vorzusehen, welcher einen ersten Wert aufweist, der den Schreib- und Lesezugriff auf den Block unabhängig vom Wert des ersten binären Parameters (PR) zulässt, sowie einen zweiten Wert, der die Auswirkungen des ersten binären Parameters (PR) auf die Zugriffsrechte auf den Block validiert.

5. Verfahren nach einem der Ansprüche 1 bis 4, bei dem ein Wert des Indexes (IDX) bedeutet, dass dem Block kein Passwort zugeteilt ist.

6. Verfahren nach den Ansprüchen 4 und 5, bei dem der Block schreibgesperrt ist, wenn der zweite binäre Parameter (b0) den zweiten Wert aufweist und wenn der Index (IDX) angibt, dass dem Block kein Passwort zugeteilt ist.

7. Verfahren nach einem der Ansprüche 1 bis 6, bei dem die Gesamtgröße des Parametrierfelds (PD0-PDn) eines Blocks kleiner ist als die Größe eines Passworts.

8. Verfahren nach einem der Ansprüche 1 bis 7, bei dem die dem Parametrierfeld (PD0-PDn) eines Blocks erteilten Schreibzugriffsrechte mit den Schreibzugriffsrechten identisch sind, die das Parametrierfeld dem Block erteilt, in dem es sich befindet.

9. Verfahren nach einem der Ansprüche 1 bis 8, bei dem die Passwortspeicherzone (PZ) eine Vielzahl von Passwortblöcken umfasst (SB1-SB3), von denen jeder ein Passwortfeld (P1-P3) enthält, sowie ein Parametrierfeld (PP1-PP3), das die Zugriffsrechte zum Passwortblock festlegt.

**10.** Verfahren nach einem der Ansprüche 1 bis 9, bei dem die Passwortspeicherzone (PZ) nur mit Hilfe von spezifischen Passwortschreibbefehlen zugänglich ist.

**11.** Verfahren nach einem der Ansprüche 1 bis 10, bei dem der Zugriff auf die Blöcke (B0-Bn) der teilbaren Speicherstelle (UMEM) per Sitzung erfolgt, wobei das Einloggen folgendes umfasst:

- einen Schritt, in dem ein Benutzerpasswort (pwu) vom Benutzer angegeben wird,
- mindestens einen Schritt, in dem das angegebene Passwort (pwu) mit mindestens einem in der Passwortspeicherzone (PZ) vorhandenen Passwort (pw1-pw3) verglichen wird, und
- einen Schritt, in dem das Vergleichsergebnis wenigstens dann gespeichert wird, wenn es positiv ist.

**12.** Verfahren nach Anspruch 11, bei dem eine Sitzung unterbrochen wird, wenn ein Benutzer ein neues Passwort angibt oder wenn die Speicherstelle außer Spannung gesetzt wird.

**13.** Verfahren nach einem der Ansprüche 11 und 12, bei dem

- die Speicherung des Passwortvergleichsergebnisses einen Schritt umfasst, der darin besteht, einen binären Wert, der gleich einem, einen Passwortblock spezifizierenden Index (IDX) ist, in ein Vergleichsregister (RREG) zu laden, und
- die Verarbeitung einer Anforderung eines Lese- oder Schreibzugriffs auf einen Block der teilbaren Speicherstelle (UMEM), einen Schritt des Vergleichs des im Parametrierfeld (PD0-PDn) des betreffenden Blocks vorhandenen Indexes (IDX) mit dem Inhalt des Vergleichregisters (RREG) umfasst, wobei das Passwort des von der Zugriffsanforderung betroffenen Blocks als gültig angegeben betrachtet wird, wenn das Vergleichsergebnis positiv ist (BCOMP=1).

**14.** Integrierter Schaltkreis (IC2), umfassend einen Speicher (MEM2), sowie einen Kontrollschaltkreis (CCT2), um den Zugriff zum Speicher zu kontrollieren, wobei der Speicher eine von mehreren Benutzern teilbare Speicherstelle (UMEM) umfasst und der Kontrollschaltkreis Mittel zum Vergleich von, von Benutzern angegebenen Passwörtern mit im Speicher vorhandenen Passwörtern umfasst, **dadurch gekennzeichnet dass:**

- der Speicher eine Passwortspeicherzone (PZ) umfasst, die eine maximale Passwortanzahl (pw1-pw3) festlegt,
- die Speicherstelle (UMEM) in eine Vielzahl von Blöcken (B0-Bn) unterteilt ist, deren Anzahl größer ist als die maximale Passwortanzahl,
- jeder Block ein Parametrierfeld (PD0-PDn) zur Parametrierung des Blockschutzes umfasst,
- das Parametrierfeld (PD0-PDn) eines jeden Blocks einen binären Index (IDX) umfasst, dessen Größe kleiner ist, als die Größe eines Passworts und der ein dem Blockschutz zugeordnetes Passwort (pw1-pw3) spezifiziert, wobei ein und dasselbe Passwort zum Schutz mehrerer Blöcke verwendet werden kann und
- der Kontrollschaltkreis (CCT2) so ausgestaltet ist, dass jedem Block Zugriffsrechte erteilt werden, die die Angabe eines Passworts erfordern, welches dem Passwort entspricht, das von dem im Parametrierfeld (PD0-PDn) des Blocks vorhandenen Index (IDX) spezifiziert ist.

**15.** Integrierter Schaltkreis nach Anspruch 14, bei dem das Parametrierfeld (PD0-PDn) eines jeden Blocks außerdem einen ersten binären Parameter (PR) umfasst, der die Zugriffsrechte auf den Block nach Angabe eines Passworts, das dem vom Index (IDX) spezifizierten Passtwort entspricht, festlegt und der zwischen Lesezugriffsrechten auf den Block und Schreibzugriffsrechten auf den Block unterscheidet.

**16.** Integrierter Schaltkreis nach einem der Ansprüche 14 und 15, bei dem der erste binäre Parameter (PR) auch Zugriffsrechte auf den Block ohne Angabe eines Passworts festlegt.

**17.** Integrierter Schaltkreis nach einem der Ansprüche 14 bis 16, bei dem das Parametrierfeld (PD0-PDn) eines jeden Blocks einen zweiten binären Parameter (b0) enthält, der einen ersten Wert aufweist, der den Schreib- und Lesezugriff auf den Block unabhängig vom Wert des ersten binären Parameters (PR) zulässt, sowie einen zweiten Wert, der die Auswirkungen des ersten binären Parameters (PR) auf die Zugriffsrechte auf den Block validiert.

**18.** Integrierter Schaltkreis nach einem der Ansprüche 14 bis 17, bei dem der Index (IDX) eines jeden Blocks auf einen Wert gesetzt werden kann, der bedeutet, dass dem Block kein Passwort zugeteilt ist.

**19.** Integrierter Schaltkreis nach den Ansprüchen 17 und 18, bei dem ein Block schreibgesperrt ist, wenn der zweite binäre Parameter (b0) den zweiten Wert aufweist und wenn der Index (IDX) angibt, dass dem Block kein Passwort zugeteilt ist.

20. Integrierter Schaltkreis nach einem der Ansprüche 14 bis 19, bei dem die Gesamtgröße des Parametrierfeldes (PD0-PDn) eines Blocks kleiner ist als die Größe eines Passworts.

21. Integrierter Schaltkreis nach einem der Ansprüche 14 bis 20, bei dem die Schreibzugriffsrechte des Parametrierfeldes (PDO-PDn) eines Blocks mit den Schreibzugriffsrechten identisch sind, die das Parametrierfeld (PD0-PDn) dem Block erteilt, in dem es sich befindet.

22. Integrierter Schaltkreis nach einem der Ansprüche 14 bis 21, bei dem die Passwortspeicherzone (PZ) eine Vielzahl von Blöcken (SB1-SB3) umfasst, die jeweils ein Passwort erhalten (pw1-pw3), sowie ein, die Blockzugriffsrechte festlegendes Parametrierfeld (PP1-PP3) umfassen.

23. Integrierter Schaltkreis nach einem der Ansprüche 14 bis 22, bei dem die Passwortspeicherzone (PZ) innerhalb einer Systemzone (SMEM) des Speichers eingerichtet und für die Benutzer nur mittels spezifischer Passwortschreibbefehle zugänglich ist.

24. Integrierter Schaltkreis nach einem der Ansprüche 14 bis 23, bei dem der Zugriff auf die Blöcke (B0-Bn) der teilbaren Speicherstelle (UMEM) per Sitzung erfolgt, wobei der Kontrollschaltkreis (CCT2) für die Ausführung einer Befehl zur Angabe eines Benutzerpassworts ausgelegt ist, und im Falle der Übereinstimmung des Benutzerpassworts mit einem in der Passwortspeicherzone (PZ) vorhandenen Passwort, den Benutzer autorisiert, auf die Blöcke (B0-Bn) zuzugreifen, deren Index (IDX) dieses Passwort für die gesamte Dauer einer Sitzung spezifiziert, ohne dass bei jedem Zugriff auf die Blöcke das Passwort angegeben werden muss.

25. Integrierter Schaltkreis nach Anspruch 24, bei dem der Kontrollschaltkreis so ausgestaltet ist, dass er eine Sitzung unterbricht, wenn ein Benutzer ein neues Passwort angibt oder wenn der integrierte Schaltkreis außer Spannung gesetzt wird.

26. Integrierter Schaltkreis nach einem der Ansprüche 24 und 25, bei dem der Kontrollschaltkreis ausgelegt ist, um

- bei Empfang des Befehls zur Angabe eines Passworts, das Benutzerpasswort mit einem in einem Passwortblock vorhandenen Passwort zu vergleichen und bei positivem Vergleichsergebnis, einen binären Wert, der gleich einem, den Passwortblock spezifizierenden Index (IDX) ist, in ein Vergleichsregister (RREG) zu laden, und
- bei Empfang eines Befehls zum Lesen oder Schreiben eines Blocks der teilbaren Speicherstelle, den Index (IDX), der in dem von der Lese- oder Schreibbefehl betroffenen Block vorhanden ist, mit dem Inhalt des Vergleichsregisters (RREG) zu vergleichen und das Passwort des von dem Befehl betroffenen Blocks als gültig angegeben zu betrachten, wenn das Vergleichsergebnis positiv ist (BCOMP=1).

**FIG.1**

**FIG.2**

FIG.3

**FIG.4**

```
                              ┌────── S1
                         ┌→  WAIT  ←┐
                         │     │    │
                         │     ↓    │
                         │ <PRESENT_PASSWORD,NUMBi,pwu> ──── S2
                         │     │    │
                         │     ↓    │
                 S3 ──── READ pwi(Pi)        <ERROR> ── S6
                         │     │                ↑
                         │     ↓                │
            S4 ──── ◇ pwi(Pi) = pwu ? ─── N ────┘
                         │
                         │ Y
                         ↓
                   RREG=IDX(SBi) ──── S5
```

**FIG.5A**

```
      S1 ──── WAIT ←─────────────────────────────────┐
              │                                        │
    S10 ──── <WRITE DTi ; Ai>                          │
              │                                        │
    S11 ──── LOAD DTi                  <ERROR> ─ S17   <RSP> ─ S19
             IREAD B(Ai)                  ↑     S19 ─    ↑
              │                           │              │
              ↓                           │              │
         ◇ b0 = 0? ──── S12               │              │
              │   └─ Y ──┐                │              │
              │ N        │                │              │
         ◇ ZIDX = 0? ── S13 ── Y ─────────┼──────────────┤
              │ N        │                │              │
         ◇ BCOMP = 1? ── S14 ── N ────────┘              │
              │ Y      │                                 │
         ◇ b1 b2 = 11? ─ S15    ◇ b1 b2 = 01? ── N       │
              │ └── Y          │      N    │    └────────┤
              │ N              │  Y        S18           │
              ↓                ↓           └─ Y          │
         IWRITE : B(Ai)= DTi ──── S16                    │
```

**FIG.5B**

**EP 1 808 770 B1**

**RÉFÉRENCES CITÉES DANS LA DESCRIPTION**

**Documents brevets cités dans la description**

*   US 5969564 A